# EUROPEAN PATENT SPECIFICATION

(11) **EP 0 887 894 B1**
(45) Date of publication and mention of the grant of the patent: **04.08.2004**
(21) Application number: 98480023.5
(22) Date of filing: 30.04.1998
(51) Int. Cl.: H01R 13/74, G06F 1/18, H01R 13/658

(54) **Securing plate for large cable-to-card connectors**
Sicherungsplatte für Leiterplattenkabelverbinder
Plaque de retenue pour connecter un câble à une carte

(30) Priority: 27.06.1997 EP 97480039
(43) Date of publication of application: 30.12.1998
(73) Proprietor: International Business Machines Corporation, Armonk, N.Y. 10504 (US)
(72) Inventor: Bonnet, Yves, 06700 St. Laurent du Var (FR); Suzzoni, Jean-Pierre, 06800 Cagnes sur Mer (FR); Cresp, Jacques, 06200 Nice (FR); Limon, Jean-Marie, 06330 Roquefort-les-Pins (FR); Centola, Bruno, 06140 Vence (FR); Baron, Dominique, 06140 Vence (FR)
(74) Representative: Etorre, Yves Nicolas

(56) References cited:
- DE-A- 3 536 586
- GB-A- 531 228
- US-A- 4 744 006
- US-A- 5 317 105
- US-A- 5 472 355
- "Multi-port I/O connector cable" IBM TECHNICAL DISCLOSURE BULLETIN, vol. 28, no. 5, October 1985 (1985-10), pages 1998-2000, XP002108105

## Description

### Technical Field

The present application relates to cable-to-card connectors and more particularly to a device for improving both Electro Magnetic Compatibility (EMC) and mechanical strength of large input/output connectors connected to Adapter Cards within a host machine such as a workstation, a personal computer, a network node ...

### Background Art

### Cable-to-Card Connectors

The workstation and personal computer market drives numerous manufacturers to provide specialized Add-On cards, called Adapter Cards, aimed at providing specific functions and attachments to various networks, computers, peripherals, and other systems (called External Devices). Many of these Adapter Cards are equipped with large Input/Output (I/O) connectors for transmitting to said External Devices the high number of signals often used by today applications. Most workstations, personal computers or other systems (called Host Machines) provide one or more slots for plugging Adapter Cards. A slot consists in free room in the host machine housing (also called chassis), associated with :
- an Adapter Card,
- electrical means (called Card Connector) for connecting the Adapter Card with the host machine circuitry, and
- an opening in the host machine housing for plugging an external Cable Connector to the Adapter Card.

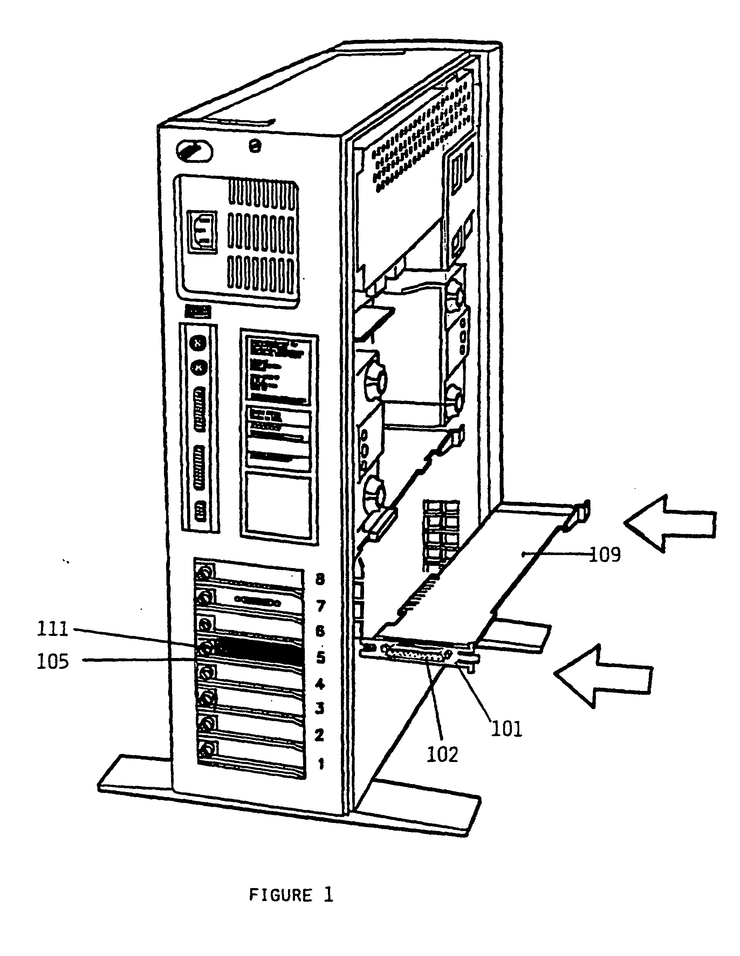

Electrical and mechanical characteristics of host machines slots as well as corresponding Adapter Cards are defined by diverse industry standards (ISA, EISA, Microchannel, PCI and others) which all have the same structure as far as Input/Output connector is concerned. As shown in Figure 1, the Adapter Card Connector (102) is electrically and mechanically fastened to the Adapter Card Printed Circuit Board (PCB) (109). A Bracket (101) is assembled with the connector (102). The external Cable Connector (103) is fastened to the bracket by a pair of screws (104, 110) or other fastening means. The function of the Bracket is to obturate the slot opening (111) when the Adapter Card is slid into the host machine slot while having access to the Adapter Card Connector (102) from outside. The Bracket may include screws, groove and tongue joints or other fasteners depending on the different standards, for securing the Adapter Card in place in the slot. In addition to obvious safe and efficient operations, Adapter Cards have to comply with various standards :
- National and International Authorities progressively enforce regulations on Electro Magnetic Compatibility (EMC) and the specifications are more and more stringent.
- The mechanical interface between Adapter Card and External Device must fit with all existing and future machines of a given type or family and must follow all relevant specifications, including design points not adapted any more to the performance improvements of current products.

### Electro Magnetic Compatibility (EMC)

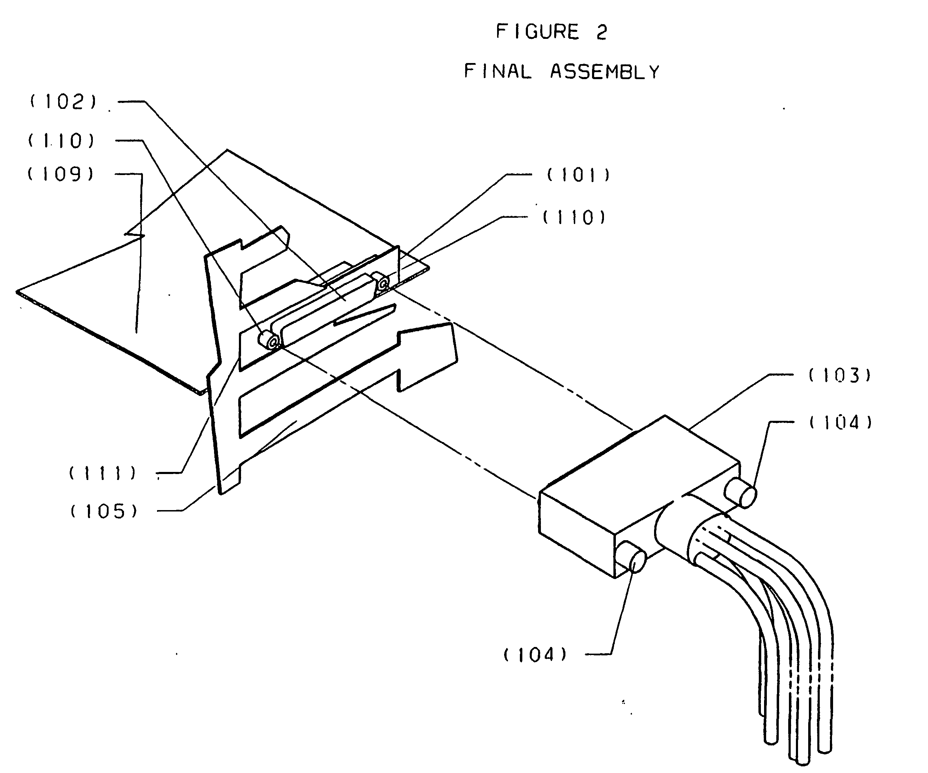

The assembly shown in Figure 2 and comprising Cable (103) and the Adapter Card Connectors (102) must provide an efficient containment of the Electro Magnetic Interference (EMI) and Radio Frequency Interference (RFI) within the host machine housing. At Adapter Card level, shielding continuity is ensured by the mechanical contact between the host machine chassis (105) and the shield of the Adapter Card Connector (102) through Bracket (101). Maximum shiel efficiency is obtained when said contact is realised all around the connector (102) otherwise inner currents of the shield are mixed with outer currents and the following problems may occur
- Generation of an Electro Magnetic Interference (EMI) capable of disturbing other devices in the vicinity (TV, AM/FM),
- Increase of the Electro Magnetic Interference (EMI) susceptibility to external electromagnetic fields created by intentional emitters (Radio, TV, GSM, ...) or by non intentional sources (Car ignition, Electrostatic Discharges, coupling with noisy cables, ...).

Consequently, an Adapter Card Connector (102), once installed, must be in contact with the Chassis (105) of the host machine, regardless of the mechanical efforts to which this connector is exposed to.

### Mechanical Constrains

Depending of host machine design, slots can be either vertical or horizontal, so Adapter cards can be installed vertically or horizontally. Mechanical problems may occur in both cases :
- *Vertical Slots* : When the Cable Connector is plugged in to the Adapter Card Connector, the output cable is primarily sensitive to horizontal impacts and constrains. This happens more particularly during the installation, configuration or maintenance of the host machine, at the time of unexpected events ...
- ***Horizontal Slots*** : When the Cable Connector is plugged in to the Adapter Card Connector, the output cable is primarily sensitive to vertical impacts and constrains, said constrains being amplified by the weight of the cable assembly.

Although the claimed invention can be used in both configurations, the configuration with horizontal Slots is the most sensitive.

### Connector Installation

By construction, Adapter Card Brackets (101) and Adapter Card Connector (102) are fixed together as shown in Figures 2 and 3. The Cable Connector (103) is inserted in the Adapter Card Connector (102) and both are fastened together by means of one or a plurality of locking screws (104). As detailed in Figure 4, the vertical force applied downwards to the Cable Connector (103) creates a torsion force at the contact point (112) of the host machine chassis (105) with the upper edge of the Bracket (101). This results in a rotational movement of the overall assembly around point (112) :
- The lower edge of Bracket (101) is pushed apart from the chassis of the host machine (105) reducing the space (dl, 107) between the chassis (105) and the bottom of the front portion of the Cable Connector (103). This mechanical constrain creates an interval or an air gap (108) between the Adapter Card Bracket (101) and the chassis (105) which dramatically impairs the electromagnetic properties of the assembly.
- The Adapter Circuit Board (109) is bent within the host machine which creates a potential source of failure.
German Patent Application DE 3536586 (filing date 14/10/85) entitled "Multi-row Flat Cable Connector" discloses a multi-row flat cable connector comprising an insulating case for incorporation of contact makers, each with a fixed connection end, which pierces the insulation of flat cable conductors, as well as a plug-type connection end consisting of a plug pin or socket. A flange case is provided on the side of the plug-type connections, which enables attachment to a mounting board. It can be fixed at the edge of a flange case aperture formed in the mounting board. In order to be able to fit the connector to the mounting board from the front and create space for locking elements for the plug-in connection, both ends of the flange case are assigned to connectable positioning plates, the distance between whose outer edges exceeds, when connected, the length of the insulating case. By means of these positioning plates, the flange case can be fixed at the edge of an aperture in the mounting board, which is larger than the flange case aperture, with an aperture length which corresponds with at least that of the insulating case.

### Summary of the Invention

The object of the present invention is to improve the electro magnetic compatibility of a connector assembly comprising :
- a host machine chassis comprising at least one slot and at least one slot opening;
- an adapter card mounted in said at least one slot inside said host machine chassis, said adapter card being assembled with:
   - an adapter card connector directed to the slot opening comprising a terminal part with electrical contacts;
   - adapter card brackets for closing the slot opening and ensuring an electro magnetic continuity with the host machine chassis;
- a cable connector comprising a terminal part with electrical contacts to be inserted through the slot opening in said card adapter connector;

The present invention relates to an external cable connector and a securing plate according to claim 10.

The pressure between the host machine chassis and the adapter card brackets is suitable for ensuring an electro magnetic contact all around the slot opening between the adapter card brackets and the host machine chassis.

A further object of the present invention is to improve the mechanical rigidity of the connector assembly.

In a preferred embodiment the securing plate is attached on the front portion of a standard cable connector with removable fastening means, in particular with a locking spring.

### Description of the Figures

Figure 1 shows a conventional host machine with Adapter Cards.
Figure 2 is a general view in perspective of a conventional connector assembly comprising a Cable Connector and an Adapter Card installed in a host machine.

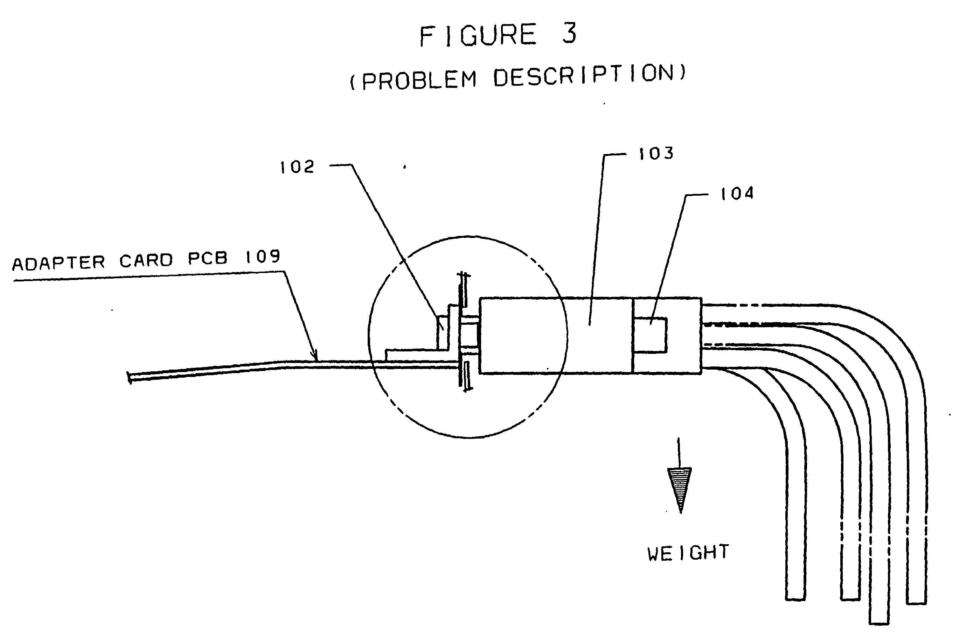

Figure 3 is a cross section view illustrating the undesirable effects of the Cable Connector torsion force on a conventional connector assembly.

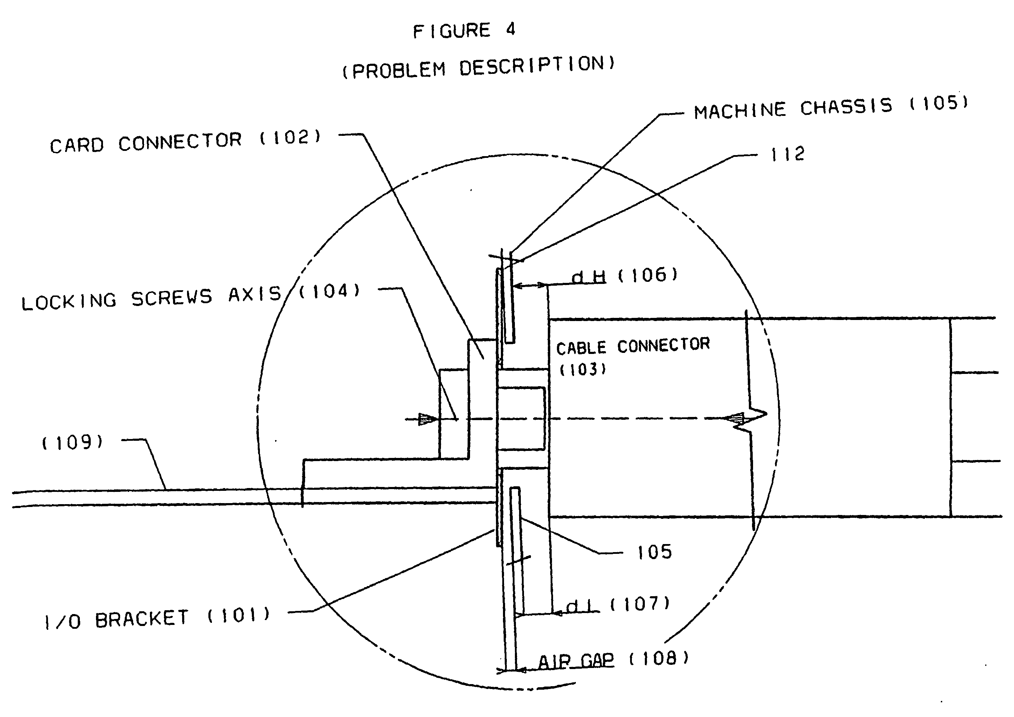

Figure 4 is a detailed view the undesirable effects of the Cable Connector torsion force on a conventional connector assembly.

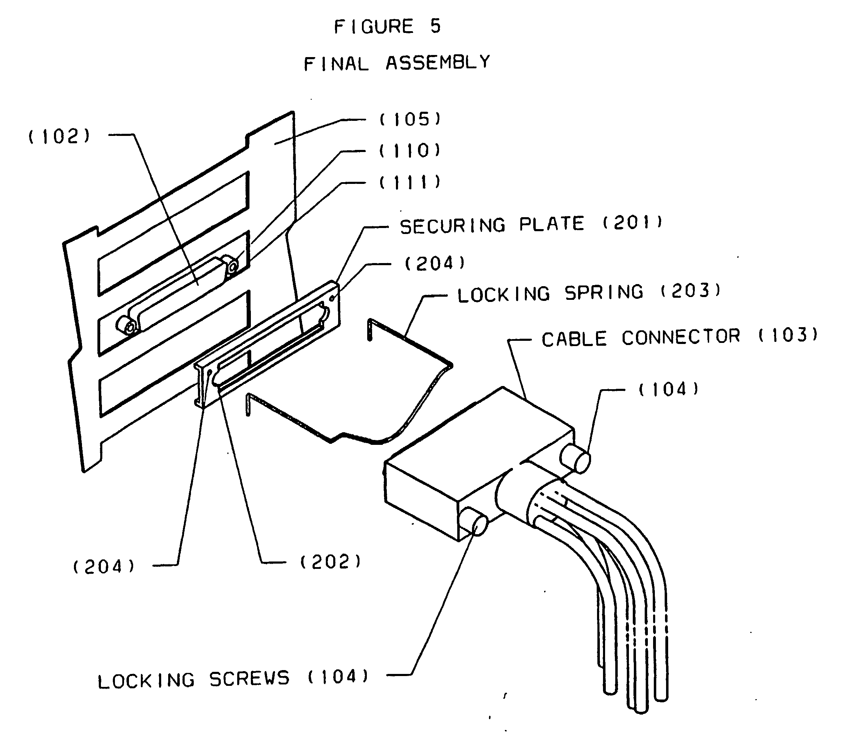

Figure 5 is a view in perspective of the Securing Plate and its installation on the connector assembly according to the claimed invention.

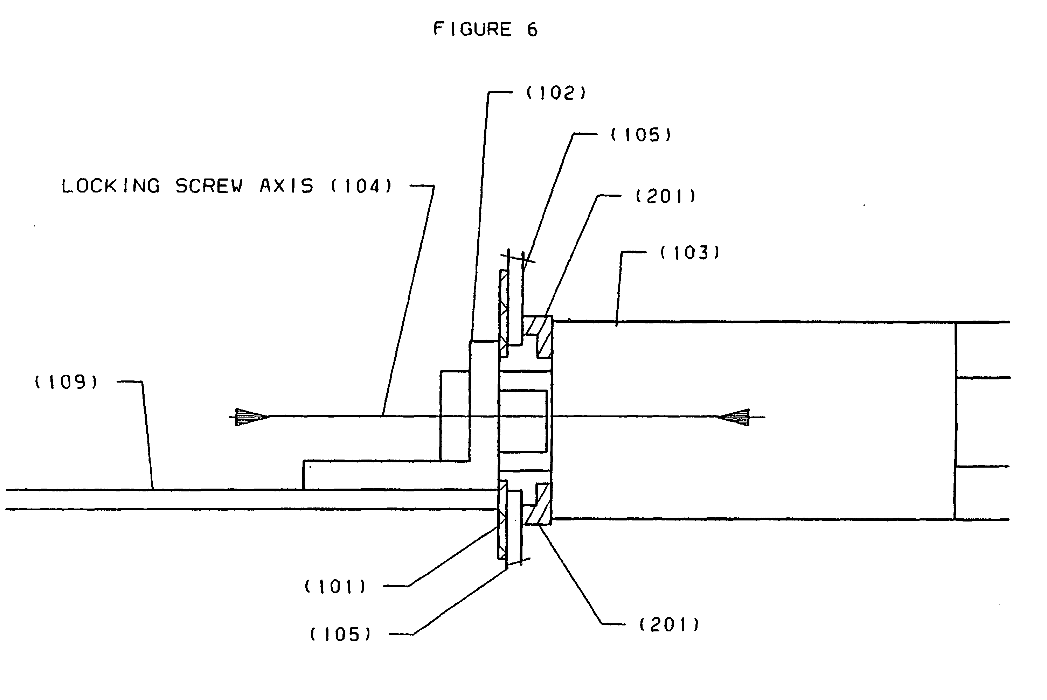

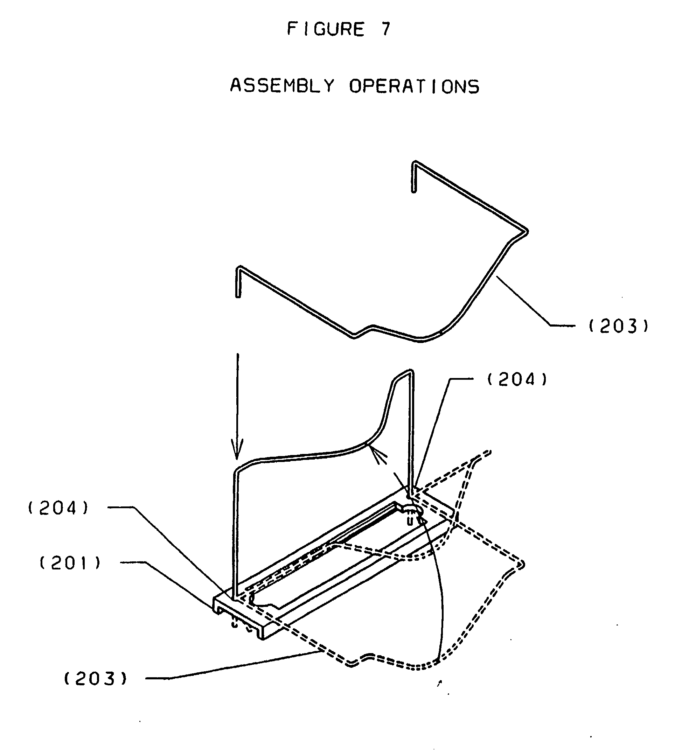

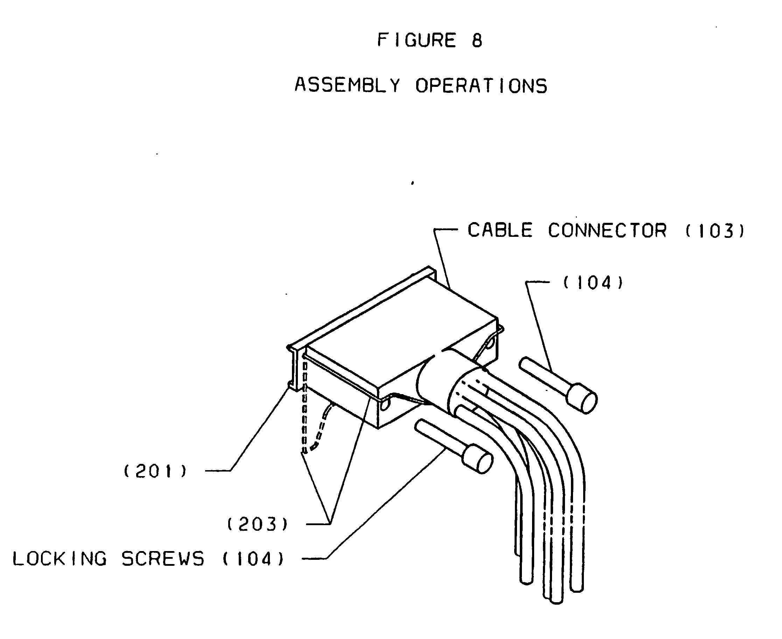

Figure 6 is a cross section view of the connector assembly according to the claimed invention.
Figure 7 shows a detailed view of the Locking Spring with its attachment on the Securing Plate according to the claimed invention.
Figure 8 shows a view in perspective of the Cable Connector with the Securing Plate and the Locking Spring according to the claimed invention.

### Detailed Description of the Preferred Embodiment

### General Principles

The present application relates to a system with its different options, designed to improve both Electro Magnetic Compatibility (EMC) and mechanical strength of large cable-to-card connectors. Although said system is more specifically adapted to the Personal Computer environment, it can also advantageously be used on any type of machine : computers, line interface cassettes for large switching hubs, and others. As described in Figure 4, the object of the present application is to prevent vertical or horizontal forces on the Cable Connector (103) from creating an air gap or a space interval (108) between the Adapter Card Bracket (101) and the chassis of the machine (105). Because the electromagnetic and mechanical properties of a connector assembly depend directly on said air gap, the claimed apparatus shown in Figure 5, includes a particular device called Securing Plate for maintaining the Cable Connector (103) perpendicular to the chassis (105) independently on the forces applied to said Cable Connector (103). In other words, the purpose of the Securing Plate (201) is :
- to maintain the upper and lower parts of the front portion of the Cable Connector at equal distance of the chassis (105) (dh = dl)
- to ensure a tight contact between the Adapter Card Bracket (101) and the chassis (105).
As shown in Figure 6, the Securing Plate (201), located between the Cable Connector (103) and the chassis (105), acts as a washer for normally positioning male and mating female connectors (Cable (103) and Adapter Card (102) connectors) and for pressing flat the connector against the chassis; Once the Securing Plate is installed :
- the Adapter Card Connector (102),
- the Chassis (105),
- the Securing Plate (201)
- the Cable Connector (103)
are firmly pressed together with help of screws (104) or other fastening means so as to flatten the Adapter Card Bracket and the Securing Plate against the chassis.
*Note* : figures and dimensions given as example are based on the use of the following equipment and standards :
- Cable Connector: ITT 2DD100P;
- Adapter Card Connector: ITT 2DD100 SBR;
- Adapter Card I/O Bracket: ISA;
- Hots machine: Personal Computer.

### Securing Plate

The size of the Securing Plate is characterized in that the pressure generated between the host machine chassis and the Adapter Card Bracket is capable of ensuring an electro magnetic contact all around the slot opening, and is suitable for ensuring a mechanical rigidity to the connector assembly.
- *Thickness*
   As shown in Figure 6, when the connector is plugged in, the Securing Plate (201) is pressed between the front portion of the Cable Connector (103) and the chassis of the host machine (105). (which in its turn is pressed flat against the Adapter Card Bracket (101)). The thickness of the Securing Plate depends on the the connector manufacturer's specifications, the mechanical tolerance on the Adapter Card Bracket (101) and the thickness of the chassis (105).
   *Example* : Securing Plate thickness = 4.5 mm.
- External Dimensions
   The dimensions of the Securing Plate (201) must be roughly larger than the size of the slot opening (111) so as to ensure a significant pressure on the host machine chassis all around the slot opening.
   ***Example* :** Securing Plate length = 90 mm.
- *Cut Out*
   The Securing Plate (201) comprises a cut out (202) for allowing the insertion of the electrical contacts between the Adapter Card Connector (103) and the Cable Connector (102).
   *Example* : D shell cut out.
- *Material*
   The Securing Plate (201) can be in metal or in or in any other resistant and stiff material.

### Attaching Means

Securing Plates are intended to be installed on already existing (conventional, standard) Cable Connectors (103) without any specific tool or particular modification. In a preferred embodiment, as described Figures 5, a removable Locking Spring (203) attaches the Securing Plate (201) to the Cable Connector (103) and prevents any loss when the Cable Connector (103) is not plugged in.

### Installation and Operation

As described in Figures 7 and 8, the installation of the Secure Plate on the connector comprises the steps of :
- Unscrewing and removing both locking screws (104) from the Cable Connector (103).
- Inserting short ends of locking spring (203) into dedicated holes (204) through the Securing Plate (201).
- Inserting the Cable Connector (103) into the Securing Plate cut out (202).
- Rotating the Locking Spring (203) by 90 degrees, up to fit against the cable bulk over-molding of the Cable Connector (103).
- Re-installing both locking screws (104) on the Cable Connector (103).
- Plugging the Cable Connector (103) assembly into the Adapter Card Connector (102).
- Screwing both locking screws (104).

The Installation is now completed : Cable connector (103), Securing Plate (201), Chassis (105), Adapter Card Bracket (101) and Adapter Card Connector (102) are now tightly fastened, the air gap (108) does exist anymore and the proof against electromagnetic radiations is recovered. The risk for mechanical failures is also dramatically reduced.

### Advantages

The present assembly allows a continuous contact all around the slot opening between the Adapter Card Connector and the chassis of the host machine which lowers the level of electromagnetic radiations and insures a constant quality in time. The Securing Plate enhances the rigidity of the overall mechanical assembly, hence dramatically reducing the risk for mechanical damage on the Adapter Card Printed Circuit Board. Here also, the reliability of the Adapter Card is significantly improved. The present invention can be implemented on already existing Adapter Cards and Cable connectors without any special tool and without any change or rework of any part involved. The invention is obviously adaptable to various connector types and dimensions and is thus widely usable and versatile. When specific connectors have to be designed, the invention is easily integrable and constitutes an intrinsic advantage for that connector.

## Claims

1. A machine assembly (201) with improved magnetic characteristics comprising :
a host machine chassis (105) comprising at least one slot card connector mounted therein and at least one slot opening (111);
an adapter card (109) mounted in said at least one slot card connector inside said host machine chassis, said adapter card being assembled with :
an internal adapter card connector (102) directed to the slot opening (111) comprising a terminal part with electrical contacts; and
adapter card brackets (101) for obturating the slot opening (111);
an external cable connector (103) comprising a terminal part with electrical contacts to be inserted through the slot opening in said internal card adapter connector, and
a securing plate (201) inserted between the external cable connector (103) and the machine chassis (105) wherein when the external cable connector (103) and the internal card connector (102) are mated, said securing plate (201) is pressed by the external cable connector (103) against the host machine chassis (105) to press the host machine chassis that against the adapter card brackets (101).

2. The machine assembly according to claim 1 wherein the pressure between the host machine chassis (105) and the adapter card brackets (101) is suitable for ensuring an electro magnetic contact all around the slot opening (111) between the adapter card brackets and the host machine chassis.

3. The machine assembly according to anyone of the preceding claims wherein the pressure between the host machine chassis (105) and the adapter card brackets (101) is suitable for ensuring a mechanical rigidity to the connector assembly.

4. The machine assembly according to anyone of the preceding claims **characterized in that** the securing plate comprises a cut out (202) for allowing the insertion of the electrical contacts between the adapter card connector and the cable connector.

5. The machine assembly according to anyone of the preceding claims **characterized in that** the securing plate's external dimensions are roughly larger than the size of the slot opening (111) so as to ensure a significant pressure on the host machine chassis all around the slot opening.

6. The machine assembly according to anyone of the preceding claims further including attaching means for attaching the securing plate to the external cable connector.

7. The machine assembly according to claim 6 wherein said attaching means (203) and said securing plate (201) are removable.

8. The machine assembly according to any one of the preceding claims wherein the attachment means includes a locking spring.

9. The machine assembly according to anyone of the preceding claims wherein said cable connector (103) is a conventional or standard cable connector.

10. An external cable connector (103) and a securing plate (201) for improving the magnetic characteristics of a machine assembly (201), comprising a terminal part with electrical contacts to be inserted in an internal card adapter connector part of an adapter card mounted in a host machine chassis, said host machine chassis (105) comprising at least one slot card connector mounted therein and at least one slot opening (111), said adapter card (109) being mounted in said at least one slot card connector inside said host machine chassis, said adapter card being assembled with an internal adapter card connector (102) directed to the slot opening (111 ) and adapter card brackets (101) for obturating the slot opening (111), said internal adapter card connector comprising a terminal part with electrical contacts,
the securing plate (201) is to be inserted between the external cable connector (103) and the machine chassis (105) wherein when the external cable connector (103) and the internal card connector (102) are mated, said securing plate (201) is pressed by the external cable connector (103) against the host machine chassis (105) to press the host machine chassis flat against the adapter card brackets (101).

## Patentansprüche

1. Maschinenanordnung (201) mit verbesserten magnetischen Eigenschaften, die Folgendes umfasst:
ein Hostmaschinengehäuse (105), das mindestens einen darin eingebauten Steckplatzkartenverbinder und mindestens eine Steckplatzöffnung(111) umfasst;
eine in den mindestens einen Steckplatzkartenverbinder im Hostmaschinengehäuse eingesteckte Adapterkarte (109), wobei die Adapterkarte mit folgenden Teilen zusammen montiert wird:
einer zur Steckplatzöffnung (111) gerichteten internen Adapterkartensteckleiste (102), die einen Anschlussteil mit elektrischen Kontakten umfasst; und
Adapterkartenträger (101), um die Steckplatzöffnung (111) abzudecken;
einen externen Kabelverbinder (103), der einen Anschlussteil mit elektrischen Kontakten umfasst, so dass er durch die Steckplatzöffnung in die interne Adapterkartensteckleiste eingesteckt werden kann; und
eine Sicherungsplatte (210), die zwischen den externen Kabelverbinder (103) und das Maschinengehäuse (105) eingefügt wird, wobei die Sicherungsplatte (201) durch den externen Kabelverbinder (103) gegen das Hostmaschinengehäuse (105) gedrückt wird, wenn der externe Kabelverbinder (103) und die interne Kartensteckleiste (102) miteinander verbunden sind, um die Adapterkartenträger (101) flach gegen das Hostmaschinengehäuse zu drücken.

2. Maschinenanordnung nach Anspruch 1, wobei der Druck zwischen dem Hostmaschinengehäuse (105) und den Adapterkartenträgern (101) geeignet ist, um einen elektromagnetischen Kontakt um die Steckplatzöffnung (111) herum zwischen den Adapterkartenträgern und dem Hostmaschinengehäuse sicherzustellen.

3. Maschinenanordnung nach irgendeinem der vorhergehenden Ansprüche, wobei der Druck zwischen dem Hostmaschinengehäuse (105) und den Adapterkartenträgern (101) geeignet ist, um eine mechanische Starrheit der Verbinderanordnung sicherzustellen.

4. Maschinenanordnung nach irgendeinem der vorhergehenden Ansprüche, **dadurch gekennzeichnet, dass** die Sicherungsplatte eine Aussparung (202) umfasst, um die Einfügung der elektrischen Kontakte zwischen der Adapterkartensteckleiste und dem Kabelverbinder zu ermöglichen.

5. Maschinenanordnung nach irgendeinem der vorhergehenden Ansprüche, **dadurch gekennzeichnet, dass** die äußeren Abmessungen der Sicherungsplatte etwas größer als die Abmessung der Steckplatzöffnung (111) sind, um um die Steckplatzöffnung herum einen merklichen Druck auf das Hostmaschinengehäuse auszuüben.

6. Maschinenanordnung nach irgendeinem der vorhergehenden Ansprüche, die außerdem ein Befestigungsmittel zum Befestigen der Sicherungsplatte an dem externen Kabelverbinder enthält.

7. Maschinenanordnung nach Anspruch 6, wobei das Befestigungsmittel (203) und die Sicherungsplatte (201) abgenommen werden können.

8. Maschinenanordnung nach irgendeinem der vorhergehenden Ansprüche, wobei das Befestigungsmittel eine Sicherungsfeder enthält.

9. Maschinenanordnung nach irgendeinem der vorhergehenden Ansprüche, wobei der Kabelverbinder (103) ein herkömmlicher bzw. ein Standardkabelverbinder ist.

10. Externer Kabelverbinder (103) und eine Sicherungsplatte (201) zur Verbesserung der magnetischen Eigenschaften einer Maschinenanordnung (201), der einen Anschlussteil mit elektrischen Kontakten umfasst, so dass er in eine interne Adapterkartensteckleiste einer in einem Hostmaschinengehäuse befestigten Adapterkarte eingesteckt werden kann, wobei das Hostmaschinengehäuse (105) mindestens einen darin befestigten Steckplatzkartenverbinder und mindestens eine Steckplatzöffnung (111) umfasst, wobei die Adapterkarte (109) in dem mindestens einen Steckplatzkartenverbinder im Hostmaschinengehäuse befestigt wird, wobei die Adapterkarte mit einer auf die Steckplatzöffnung (111) gerichteten internen Adapterkartensteckleiste (102)und Adapterkartenträgern (101) zum Verschließen der Steckplatzöffnung (111) aufgebaut ist, wobei die interne Adapterkartensteckleiste einen Anschlussteil mit elektrischen Kontakten umfasst,
wobei die Sicherungsplatte (201) zwischen den externen Kabelverbinder (103) und das Maschinengehäuse (105) eingefügt werden muss, wobei die Sicherungsplatte (201) durch den externen Kabelverbinder (103) gegen das Hostmaschinengehäuse (105) gedrückt wird, wenn der externe Kabelverbinder (103) und die interne Kartensteckleiste (102) miteinander verbunden sind, um die Adapterkartenträger (101) flach gegen das Hostmaschinengehäuse zu drücken.

## Revendications

1. Structure de machine (201) ayant des caractéristiques magnétiques améliorées comprenant :
un châssis de machine hôte (105) comprenant au moins un connecteur d'emplacement de carte monté dans celui-ci et au moins une ouverture d'emplacement (111),
une carte d'adaptateur (109) montée dans ledit au moins un connecteur d'emplacement de carte à l'intérieur dudit châssis de machine hôte, ladite carte d'adaptateur étant montée avec :
un connecteur interne de carte d'adaptateur (102) orienté vers l'ouverture de l'emplacement (111), comprenant une partie de bornes avec des contacts électriques, et
des supports de carte d'adaptateur (101) destinés à obturer l'ouverture de l'emplacement (111),
un connecteur de câble externe (103) comprenant une partie de bornes avec des contacts électriques devant être inséré au travers de l'ouverture d'emplacement dans ledit connecteur interne d'adaptateur de carte, et
une plaque de fixation (201) insérée entre le connecteur de câble externe (103) et le châssis de la machine (105), où lorsque le connecteur de câble externe (103) et le connecteur interne de carte (102) sont accouplés, ladite plaque de fixation (201) est pressée par le connecteur de câble externe (103) contre le châssis de la machine hôte (105) pour appuyer à plat contre les supports de carte d'adaptateur (101).

2. Structure de machine selon la revendication 1, dans laquelle la pression entre le châssis de la machine hôte (105) et les supports de carte d'adaptateur (101) convient pour assurer un contact électromagnétique tout autour de l'ouverture d'emplacement (111) entre les supports de carte d'adaptateur et le châssis de la machine hôte.

3. Structure de machine selon l'une quelconque des revendications précédentes, dans laquelle la pression entre le châssis de la machine hôte (105) et les supports de carte d'adaptateur (101) convient pour assurer une rigidité mécanique pour la structure de connecteur.

4. Structure de machine selon l'une quelconque des revendications précédentes, **caractérisée en ce que** la plaque de fixation comprend une découpe (202) destinée à permettre l'insertion des contacts électriques entre le connecteur de carte d'adaptateur et le connecteur de câble.

5. Structure de machine selon l'une quelconque des revendications précédentes, **caractérisée en ce que** les dimensions externes de la plaque de fixation sont approximativement plus grandes que la taille de l'ouverture de l'emplacement (111) de façon à assurer une pression significative sur le châssis de la machine hôte tout autour de l'ouverture de l'emplacement.

6. Structure de machine selon l'une quelconque des revendications précédentes, comprenant en outre un moyen de fixation destiné à fixer la plaque de fixation au connecteur de câble externe.

7. Structure de machine selon la revendication 6, dans laquelle ledit moyen de fixation (203) et ladite plaque de fixation (201) sont amovibles.

8. Structure de machine selon l'une quelconque des revendications précédentes, dans laquelle le moyen de fixation comprend un ressort de blocage.

9. Structure de machine selon l'une quelconque des revendications précédentes, dans laquelle ledit connecteur de câble (103) est un connecteur de câble classique ou standard.

10. Connecteur de câble externe (103) et plaque de fixation (201) destinés à améliorer les caractéristiques magnétiques d'une structure de machine (201), comprenant une partie de bornes avec des contacts électriques devant être insérée dans une partie de connecteur interne d'adaptateur de carte d'une carte d'adaptateur montée dans un châssis de machine hôte, ledit châssis de machine hôte (105) comprenant au moins un connecteur d'emplacement de carte monté dans celui-ci, et au moins une ouverture d'emplacement (111), ladite carte d'adaptateur (109) étant montée dans ledit au moins un connecteur d'emplacement de carte à l'intérieur dudit châssis de machine hôte, ladite carte d'adaptateur étant montée avec un connecteur interne de carte d'adaptateur (102) orienté vers l'ouverture de l'emplacement (111) et des supports de carte d'adaptateur (101) destinés à obturer l'ouverture de l'emplacement (111), ledit connecteur interne de carte d'adaptateur comprenant une partie de bornes avec des contacts électriques,
la plaque de fixation (201) doit être insérée entre le connecteur de câble externe (103) et le châssis de machine (105) dans lequel, lorsque le connecteur de câble externe (103) et le connecteur de câble interne (102) sont accouplés, ladite plaque de fixation (201) est pressée par le connecteur de câble externe (103) contre le châssis de la machine hôte (105) pour appuyer le châssis de la machine hôte à plat contre les supports de la carte d'adaptateur (101).
